# EUROPÄISCHE PATENTSCHRIFT

(11) **EP 3 778 320 B1**
(45) Veröffentlichungstag und Bekanntmachung des Hinweises auf die Patenterteilung: **11.05.2022**
(21) Anmeldenummer: 20198609.8
(22) Anmeldetag: 09.07.2018
(51) Int. Cl.: B60S 3/04

(54) **WASCHANLAGE MIT REGELBARER DOSIERUNG**
WASHING INSTALLATION WITH ADJUSTABLE METERING
INSTALLATION DE LAVAGE À DOSAGE RÉGLABLE

(30) Priorität: 10.07.2017 DE 102017115345
(43) Veröffentlichungstag der Anmeldung: 17.02.2021
(62) Teilanmeldung aus: 18739518.1
(73) Patentinhaber: WashTec Holding GmbH, 86153 Augsburg (DE)
(72) Erfinder: MAYER, Stefan, 86356 Neusäss (DE); HEINZ, Bernhard, 86368 Gersthofen (DE); SATTLER, Andreas, 81543 München (DE)
(74) Vertreter: Schwarz, Claudia

(56) Entgegenhaltungen:
- WO-A2-2007/039266
- US-A1- 2003 127 534

## Beschreibung

Die vorliegende Erfindung betrifft ein Verfahren zum Betreiben einer Waschanlage für Fahrzeuge, bei der einer Waschflüssigkeit, wie z.B. Wasser, ein chemischer Zusatz bzw. eine Zumischung beigemischt wird und eine elektronische Schaltungseinheit sowie eine Dosierpumpe.

Bei der Fahrzeugwäsche werden der Waschflüssigkeit unterschiedliche chemische Zusatzstoffe, wie z.B. Shampoo's, Felgenreiniger, in einer bestimmten Konzentration zugemischt, um das Waschergebnis zu verbessern. Damit die gewünschte Konzentration erzielt wird, ist es bekannt, eine Dosierpumpe einzusetzen.

So zeigt die EP 2,885,169 B1 eine Dosiervorrichtung, wie sie im Stand der Technik bekannt ist. Sie wirkt mit einer Steuervorrichtung zusammen, damit die Dosiermenge gemäß fester Vorgaben gesteuert werden kann.

Entsprechende Behältnisse und Kartuschen zur Bereitstellung der Zusatzstoffe sind aus der EP 2 024 238 und der EP 2 136 938 bekannt.

US 2003 / 0127534 A1 zeigt eine Vorrichtung zur Dosierung des Chemikalienverhältnisses, die in erster Linie zur Verwendung in einer Fahrzeugwaschanlage bestimmt ist. Ein Portal und Sprühdüsen werden zum Waschen eines Fahrzeugs verwendet. Eine Menge Lösungsmittel, wie z. B. Wasser, wird unter Druck von Wasserpumpen bereitgestellt. Eine Chemikalie wird unter Druck von Chemikalienpumpen bereitgestellt, die unter Kontrolle einer Steuereinheit und Durchflusssensoren im richtigen Verhältnis gemischt werden. Die Steuereinheit steuert Dosiervorrichtungen, wie eine Dosierpumpe und/oder ein oder mehrere Dosiermagnetventile, um die Menge der in das System eintretenden Chemikalie zu steuern.

WO 2007 / 039266 A2 zeigt eine Farbwaschschaumversorgungseinrichtung in einer automatischen Autowaschanlage umfassend: einen Mischer; Wasserzufuhrmittel und Luftzufuhrmittel zu dem Mischer,- eine erste Dosiereinheit eines ersten farbigen Schaummittels, die mit dem Mischer verbunden ist; mindestens eine zweite Dosiereinheit eines zweiten Schaummittels, das eine andere Färbung als das erste Schaummittel aufweist, die ebenfalls mit dem Mischer verbunden ist; eine Vielzahl von Düsen, die den aus dem Gemisch aus Wasser, Luft, dem ersten und mindestens dem zweiten Schaummittel resultierenden Waschschaum zuführen; und eine Steuereinheit für die Betriebsparameter zumindest der Wasserzufuhr und/oder der Luftzufuhr und/oder der ersten Dosiereinheit und/oder der zweiten Dosiereinheit, wobei die Steuereinheit programmierbare Speichermittel für eine Vielzahl von Kombinationen des Zeitverlaufs der Betriebsparameter aufweist.

Als nachteilig hat es sich bei den bisherigen Dosiervorrichtungen erwiesen, dass die Anpassungsoptionen an veränderte Systemzustände während des Betriebs der Waschanlage nur sehr begrenzt sind. Dies kann zu Fehldosierungen und in Folge zu hohen Wartungskosten und vermeidbaren Stillstandzeiten führen. Bei geänderten Systembedingungen musste bisher jeweils eine neue Kalibrierung des Systems vorgenommen werden. Hatte sich z.B. der Versorgungsdruck in einer Wasserzuleitung geändert, so musste die Dosierpumpe im Stand der Technik neu angesteuert werden, um die gewünschte Anwendungskonzentration bei dem geänderten Systemzustand (anderer Wasserdruck) zu erhalten.

Ausgehend von diesem Stand der Technik liegt der vorliegenden Erfindung die Aufgabe zugrunde, eine Waschanlage so zu betreiben, dass die gewünschte Anwendungskonzentration des Additivs in der Waschflüssigkeit auch bei veränderlichen Betriebsbedingungen auf konstante oder vorgesehene Weise bereitgestellt werden kann. Zudem sollen die Servicekosten verringert werden.

Diese Aufgabe wird durch die beiliegenden unabhängigen Patentansprüche gelöst, insbesondere durch ein Verfahren und eine elektronische Schaltungseinheit. Vorteilhafte Weiterbildungen finden sich in den Unteransprüchen und in der Beschreibung.

In einem ersten Aspekt wird diese Aufgabe gelöst durch ein Verfahren zum Betreiben einer Waschanlage mit einer elektronisch regelbaren Dosierpumpe, mit folgenden Verfahrensschritten:
- Erfassen (Messen oder Einlesen, z.B. aus einem digitalen Speicher) von Sensordaten, insbesondere Erfassen eines Volumenstroms einer Waschflüssigkeit;
- Einlesen einer gewünschten Anwendungskonzentration des Additivs in der Waschflüssigkeit;
- Regeln einer Sollvorgabe für die Dosierpumpe zur Förderung eines Volumenstroms des Additivs, so dass die eingelesene gewünschte Anwendungskonzentration abhängig von erfassten Sensordaten und insbesondere in Abhängigkeit von einem veränderlichen Volumenstrom der Waschflüssigkeit erzielt wird,
- wobei als Sensordaten neben dem Volumenstrom der Waschflüssigkeit weitere Diagnosedaten, insbesondere ein Druck der Waschflüssigkeit, erfasst werden, um aus den erfassten Sensordaten (mit den Diagnosedaten) fehlerdiagnostische Informationen zu berechnen und bereitzustellen.

Bei dem Additiv handelt es sich um einen chemischen Zusatzstoff, der dem Wasser dosiert beigemischt wird. Er kann in flüssiger (als Konzentrat), pastöser oder pulverisierter Form bereitgestellt werden. Zur dosierten Mischung von Additiv und Waschflüssigkeit können Misch- und Wirbelkammern vorgesehen sein.

Die Sollvorgabe ist ein Befehlssatz, der von der elektronischen Schaltungseinheit an die Dosierpumpe zur Ausführung gesendet wird. Er gibt an, welches Volumen die Pumpe fördern soll (als Angabe von Liter/Zeiteinheit, z.B. 2,8 l/h bzw. 46,7 ml/min). Die Sollvorgabe kennzeichnet die Pumpenleistung (bei fehlerfreiem Betrieb der Pumpe). Im Fehlerfall kann die Pumpenleistung durch einen Sensor (z.B. mittels Volumenstrommessgerät) erfasst und mit der Sollvorgabe abgeglichen werden, um diagnostische und weitere Fehlerbehebungsmaßnahmen anzustoßen.

Erfindungsgemäß wird als Sensordaten neben dem Volumenstrom zusätzlich ein Druck der Waschflüssigkeit erfasst. Die Erfassung kann mittels eines Drucksensors in der Wasserversorgungsleitung ausgeführt werden. Dies hat den Vorteil, dass aus dem Verhältnis der erfassten Sensordaten fehlerdiagnostische Information berechnet und bereitgestellt werden können.

Gemäß einer bevorzugten Ausführungsform der Erfindung wird ein Volumenstrom des von der Dosierpumpe geförderten Additivs gemessen, um die Dosierpumpe auf Basis eines Volumenstromverhältnisses - also dem Verhältnis zwischen Volumenstrom-Waschflüssigkeit und Volumenstrom-Additiv) in Hinblick auf die gewünschte Anwendungskonzentration zu regeln. Damit können fehlerhafte Mischungsverhältnisse, die z.B. aus geänderten Systembedingungen resultieren (z.B. einer Wasservolumenstromänderung) vermieden werden.

In einer weiteren, vorteilhaften Ausführungsform der Erfindung wird eine zeitplanbasierte Regelung ausgeführt. Damit ist die Anwendungskonzentration über die Zeit adaptiv veränderlich regelbar und kann insbesondere innerhalb eines Sprühlaufes veränderlich geregelt werden. Damit kann die Regelung noch besser an die Anwendungssituation angepasst werden. Zudem können Kosten gespart und die Umwelt geschont werden, in dem eine überhöhte Anwendungskonzentration der Zumischung vermieden werden kann.

In einer weiteren, vorteilhaften Ausführungsform der Erfindung wird eine positionsbasierte Regelung ausgeführt wird, indem die Waschanlage mehrere Dosierpumpen umfasst, die separat bzw. jeweils einzeln geregelt werden, so dass die Anwendungskonzentration zum Betreiben der von der jeweiligen Dosierpumpe gespeisten Betriebsaggregate adaptiv und einzeln vorgegeben wird. Damit kann die Anwendungskonzentration sogar adaptiv für ausgewählte oder alle Sprühäste (oder sogar für jede Sprühdüse der Waschanlage einzeln, wenn diese jeweils einzeln von einer Dosierpumpe versorgt werden) veränderlich regelbar sein. Damit kann die Regelung weiterhin besser und noch spezifischer an die Anwendungssituation angepasst werden. Alternativ oder kumulativ können von einer Dosierpumpe mehrere Betriebsaggregate gespeist werden, deren Anwendungskonzentration wie vorstehend beschrieben regelbar ist und die durch eine entsprechende Ventilanordnung aktivierbar (bzw. zugeschaltet) oder de-aktivierbar (abgeschaltet) sind.

In einer weiteren, vorteilhaften Ausführungsform der Erfindung erfolgt die Regelung der Anwendungskonzentration (des beigemischten Additivs in Wasser) jeweils für einen Prozessschritt der Waschanlage einzeln und separat. Damit kann eine wesentlich genauere Regelung der Dosierpumpe erzielt werden.

Es ist möglich, mehrere Dosierpumpen in einer Waschanlage zu verbauen. Jede dieser Dosierpumpen kann vorteilhafterweise individuell von der elektronischen Schaltungseinheit geregelt werden. Vorteilhafterweise können bei der Regelung auch technische Interdependenzen der Dosierpumpen berücksichtigt werden. Es kann z.B. bei hohem Einsatz von Vorreinigern notwendig sein, die Anwendungskonzentration des nachfolgend applizierten Trocknungshilfsmittels anzuheben, um eine optimale Entnetzung des Fahrzeugs von der Waschflotte, vor der Gebläsetrocknung, zu erreichen.

In einer weiteren, vorteilhaften Ausführungsform der Erfindung wird die Dosierpumpe auch bei geänderten Systembedingungen, wie z.B. einem schwankendem Waschflüssigkeitsdruck und/oder bei Veränderungen im Sprühsystem und/oder unter Berücksichtigung von anderen Störgrößen derart geregelt, dass die gewünschte Anwendungskonzentration erzielt wird. Eine erneute Kalibrierung des Systems ist nicht mehr notwendig. Das System reagiert automatisch auf Systemänderungen und Störgrößen.

In einer bevorzugten Ausführungsform der Erfindung umfasst die Waschanlage eine Ventilanordnung, die in Eingriff steht mit einer Zuleitung bzw. der Zufuhr von Waschflüssigkeit und die zur Anpassung der zugeführten Waschflüssigkeit dient und dazu von der elektronischen Schaltungseinheit gesteuert und/oder geregelt wird. Diese Ausführung hat den Vorteil, dass eine weitere Anpassungsmöglichkeit an geänderte Betriebsbedingungen möglich ist. So kann z.B. bei erhöhtem Wasserversorgungsdruck eine Drosselung über ein ansteuerbares Drosselventil vorgenommen werden.

In einer weiteren vorteilhaften Ausführungsform der Erfindung ist die Ventilanordnung elektromechanisch betätigt. In alternativen Ausführungsform der Erfindung kann die Ventilanordnung auch rein elektrisch oder hydraulisch betätigt werden. Die Steuersignale werden von der elektronischen Schaltungseinheit der Waschanlage ausgegeben. Dies hat den Vorteil, dass die Ansteuerung der Ventilanordnung zugleich bei der Regelung der Dosierpumpe berücksichtigt werden kann.

In einer anderen vorteilhaften Ausführungsform der Erfindung wird die mit der Dosierpumpe bereitgestellte Anwendungskonzentration des Additivs in der Waschflüssigkeit über eine Verteilerventilanordnung zur selektiven Einspeisung in ausgewählte Betriebsaggregate der Waschanlage und insbesondere in ausgewählte Sprühdüsen eines Sprühsystems dediziert für jeweils einen Prozessschritt der Waschanlage verteilt. Dies führt vorteilhafterweise dazu, dass die Sprühdüsen sehr spezifisch und auch für jeden Prozessschritt unterschiedlich (natürlich auch übereinstimmend) geregelt werden können.

In einer anderen vorteilhaften Ausführungsform der Erfindung umfasst die Waschanlage weiterhin eine zweite Sensoreinheit zur Erfassung von dosierpumpen-bezogenen Betriebszustandsdaten. Die Betriebszustandsdaten betreffen den Betriebszustand der Dosierpumpe. Sie können insbesondere eine Dosierpumpenleistung und/oder eines von der Dosierpumpe geförderten Volumenstroms des Additivs umfassen. Sie können weiterhin Fehlerstatusmeldungen, Temperatursignale und/oder Druck- und Wegmesssignale von Bauteilen der Dosierpumpe umfassen.

In einem weiteren Aspekt betrifft die Erfindung eine elektronische Schaltungseinheit zum Betreiben einer Dosierpumpe, mit:
- einer Eingangsschnittstelle, die zur Erfassung von gemessenen Sensordaten von zumindest einem versorgungsseitigen Volumenstrommessgerät bestimmt ist und
- einer Schnittstelle, insbesondere einer Benutzerschnittstelle, zur Erfassung der gewünschten Anwendungskonzentration des Additivs in der Waschflüssigkeit;
- einer Ausgangsschnittstelle, die zur Ausgabe einer Sollvorgabe zur Regelung der Dosierpumpe und zur Ausgabe von fehlerdiagnostischen Informationen bestimmt ist,
- wobei die elektronische Schaltungseinheit zum Regeln einer Sollvorgabe für die Dosierpumpe zur Förderung eines Volumenstroms des Additivs bestimmt ist, so dass in Abhängigkeit von erfassten Sensordaten und insbesondere in Abhängigkeit von dem erfassten Volumenstrom der Waschflüssigkeit die eingelesene gewünschte Anwendungskonzentration erzielt wird,
- wobei als Sensordaten neben dem Volumenstrom der Waschflüssigkeit Diagnosedaten, umfassend einen Druck der Waschflüssigkeit, erfasst werden,
- wobei die elektronische Schaltungseinheit (S) mit einer Diagnoseeinheit ausgebildet ist, um aus den erfassten Sensordaten und insbesondere aus dem Verhältnis der erfassten Sensordaten (Volumenstrom/Druck) die fehlerdiagnostische Information zu berechnen und insbesondere auf der Ausgangsschnittstelle bereitzustellen.

In einer bevorzugten Ausführungsform der Erfindung kann es sich bei der Ausgangsschnittstelle auch um die Benutzerschnittstelle handeln.

Die elektronische Schaltungseinheit kann als Regler oder als Steuerung für die Dosierpumpe ausgebildet sein.

Die elektronische Schaltungseinheit umfasst in einer bevorzugten Ausführungsform der Erfindung eine Diagnoseeinheit, die zum Berechnen der fehlerdiagnostischen Information ausgebildet ist und dazu über die geeigneten Schnittstellen zu den Sensoren und zur Schnittstelle, insbesondere Benutzerschnittstelle, umfasst. Die elektronische Schaltungseinheit umfasst somit vorzugsweise die Diagnoseeinheit, um aus den erfassten Sensordaten fehlerdiagnostische Information zu berechnen und insbesondere auf der Ausgangsschnittstelle bereitzustellen. Mit der Ausbildung der Diagnoseeinheit in der elektronischen Schaltungseinheit kann letztere mit zwei Funktionen beaufschlagt werden, zum einen mit der Regelungs-/Steuerungsaufgabe und zum anderen mit der Überwachungsaufgabe zur Fehlervermeidung.

In einer bevorzugten Ausführungsform der Erfindung umfasst die Waschanlage und/oder die elektronische Schaltungseinheit eine Benutzeroberfläche zur Ausgabe von Regelungsinformationen, Fehlerinformationen und/oder weiteren Daten.

In einer anderen vorteilhaften Ausführungsform der Erfindung ist die Eingangsschnittstelle weiterhin zur Erfassung von weiteren Sensordaten bestimmt. Sie kann darüber hinaus eine Netzwerkschnittstelle zur Erfassung von weiteren Regelungsdaten umfassen. Damit können vorteilhafterweise noch weitere Daten zur Regelung berücksichtigt werden, wie z.B. Wetterdaten, die aus einer Online-Datenbank abgerufen werden und die einen Verschmutzungsgrad indizieren. Zudem oder alternativ könne Fahrprofildaten eingelesen und für die Regelungsaufgabe ausgewertet und berücksichtigt werden.

Die Ausgangsschnittstelle kann eine Aktorschnittstelle umfassen, um weitere Aktoren der Waschanlage anzusteuern oder zu regeln. Die Ausgangsschnittstelle kann eine Aktorschnittstelle umfassen, um weitere Aktoren der Waschanlage anzusteuern, wie z.B. Verteilerventile, um die Anwendungskonzentration der Zumischung auf unterschiedliche Sprühäste des Sprühsystems aufzuteilen. Weiterhin können Druckregelventile zum Einsatz kommen.

In einer anderen vorteilhaften Ausführungsform der Erfindung umfasst die Sensoreinheit der Waschanlage ein Volumenstrommessgerät und/oder ein Druckmessgerät. Durch die zusätzliche Erfassung von Druckmessdaten (als Sensordaten) können unterschiedliche Vorteile erzielt werden. So können der gemessene Volumenstrom und der gemessene Druck einer Diagnoseeinheit zugeführt werden, um eine gezielte technische Fehlersuche und Diagnose ausführen zu können. Vorzugsweise ist die Diagnoseeinheit als Softwarediagnosemodul implementiert und kann direkt in der Steuerung implementiert werden. Wird z.B. ein hoher Volumenstrom bei sehr geringem Druck gemessen, so indiziert dies einen Fehler, der auf eine fehlerhafte Druckversorgung (z.B. Kupplung defekt) zurückzuführen ist. Andernfalls, wenn also ein geringer Volumenstrom bei sehr hohem Druck gemessen wird, so kann dies auf eine Verstopfung der Sprühdüsen zurückzuführen sein. Eine entsprechende technische Diagnose kann auf einer Benutzerschnittstelle ausgegeben und/oder an ein Wartungssystem (über eine Netzwerkverbindung) weitergeleitet werden. Damit können Fehler somit direkt und unmittelbar an der Anlage erkannt und der Einsatz eines Servicetechnikers vermieden werden.

Gemäß einem weiteren Aspekt betrifft die Erfindung eine elektronisch regelbare Dosierpumpe zur Verwendung in einer Waschanlage. Dabei ist die Dosierpumpe, wie vorstehend bereits beschrieben, dazu bestimmt, einen Volumenstrom des Additivs so zu fördern, dass bei Zumischung des Additivs in die Waschflüssigkeit eine gewünschte Anwendungskonzentration auch dann bereitgestellt wird, wenn sich der Systemzustand und insbesondere der Volumenstrom und/oder der Druck der zugeführten Waschflüssigkeit ändert. Die Mischung aus Waschflüssigkeit und Additiv in gewünschter Dosierung dient zur Einspeisung in ein Betriebsaggregat der Waschanlage. Dazu wird die Dosierpumpe gemäß einer Sollvorgabe geregelt. Die Sollvorgabe wird in Abhängigkeit von aktuell erfassten Sensordaten von der elektronischen Schaltungseinheit berechnet. Die Menge der erfassten Sensordaten kennzeichnet den Systemzustand. So ist z.B. ein erster Systemzustand bei einem ersten Volumenstrom der Waschflüssigkeit und bei einer ersten Umgebungstemperatur und bei einem ersten Wasserversorgungsdruck und bei einem ersten Verschmutzungsgrad definiert, während ein zweiter Systemzustand durch einen zweiten Volumenstrom, durch eine zweite Umgebungstemperatur, durch einen zweiten Wasserversorgungsdruck und durch einen zweiten Verschmutzungsgrad definiert ist etc.. Die Regelung der Dosierpumpe DP kann so an den aktuell erfassten Systemzustand angepasst werden. Welche Sensordaten und Parameter für die Definition des Systemzustandes erfasst werden, kann vordefiniert werden. Zumindest erfolgt die Regelung in Abhängigkeit von dem erfassten Volumenstrom der Waschflüssigkeit.

In einer vorteilhaften Ausführungsform ist die elektronisch regelbare Dosierpumpe zur Verwendung in einer automatischen Waschanlage vorgesehen, die auf Basis einer Sollvorgabe der Waschanlage und in Abhängigkeit von erfassten Sensordaten geregelt wird und dazu bestimmt ist, einen Volumenstrom des Additivs so zu fördern, so dass bei Zumischung des Additivs in die Waschflüssigkeit eine gewünschte Anwendungskonzentration bereitgestellt wird, die insbesondere zur Einspeisung in ein Betriebsaggregat der Waschanlage bestimmt ist.

In einer vorteilhaften Ausführungsform umfasst das Betriebsaggregat ein Sprühsystem mit einer Menge von Sprühdüsen.

In einer vorteilhaften Ausführungsform wird die Sollvorgabe für den zu fördernden Volumenstrom der Dosierpumpe von einer elektronischen Schaltungseinheit der Waschanlage vorgegeben und geregelt.

In einer vorteilhaften Ausführungsform steht die Dosierpumpe über ein Bussystem mit einer elektronischen Schaltungseinheit der Waschanlage zur Regelung der Dosierpumpe in Datenaustausch.

Bei dem Betriebsaggregat kann es sich z.B. um ein Sprühsystem mit einer Menge von Sprühdüsen handeln. Die Ausbildungen des Sprühsystems können je nach Anwendung unterschiedlich sein. Üblicherweise ist zumindest ein Sprühast pro Seite vorgesehen, der mehrere Sprühdüsen umfassen kann. Je nach Prozessschritt im Waschbetrieb können die einzelnen Sprühdüsen selektiv aktiviert werden (z.B. durch eine entsprechende Ventilsteuerung zu- oder abgeschaltet werden). Ein Betriebsaggregat kann von einer oder von mehreren Dosierpumpen (die z.B. unterschiedliche Additive zusetzen) gespeist werden. Eine Dosierpumpe kann auch ausgebildet sein, mehrere Betriebsaggregate zu speisen. Ein wichtiger Vorteil der vorliegenden Erfindung ist, dass die Anwendungskonzentration des Additivs in der Waschflüssigkeit variabel für jeden Prozessschritt separat geregelt werden kann.

In einer bevorzugten Ausführungsform der Erfindung wird eine Sollvorgabe für den zu fördernden Volumenstrom der Dosierpumpe von einer elektronischen Schaltungseinheit der Waschanlage vorgegeben und geregelt. Sind mehrere Dosierpumpen für die gleichen Sprühsystem oder für unterschiedliche Sprühsysteme vorgesehen, so können die Dosierpumpen vorzugsweise zentral von der elektronischen Schaltungseinheit (z.B. mit einem Microcontroller) der Waschanlage geregelt werden. Falls mehrere Dosierpumpen im Einsatz sind, können diese auch selektiv geregelt werden, um eine übergeordnete Aufgabe, die mehrere Betriebsaggregate betrifft, zu erfüllen. So kann z.B. bei stark verschmutzten Felgen zunächst eine höhere Dosierung des Additivs bzw. eine höhere Anwendungskonzentration desselben indiziert sein für diejenigen Sprüharme, die die Felgen (rechts- und linksseitig) reinigen. Nach einer Einwirkzeit kann in einem nachgelagerten Prozessschritt eine geringere Anwendungskonzentration appliziert werden. Andere Sprüharme, die von anderen Dosierpumpen gespeist werden, können jedoch parallel mit einer anderen Zumischung und/oder mit einer anderen Anwendungskonzentration des Additivs betrieben werden.

In einer anderen bevorzugten Ausführungsform der Erfindung steht die Dosierpumpe über ein Bussystem (insbesondere einen CAN-Bus) mit der elektronischen Schaltungseinheit der Waschanlage zur Regelung der Dosierpumpe in Datenaustausch. Das Bussystem kann ausgelegt sein, um die Sensorsignale, wie z.B. den gemessenen Volumenstrom des Additivs und/oder der Waschflüssigkeit an die Schaltungseinheit zu übertragen und kann darüber hinaus ausgelegt sein, die Sollvorgaben für die Regelung an die Dosierpumpe zu übergeben.

Weitere technische Merkmale der Erfindung und insbesondere vorteil- und beispielhafte Ausführungsformen der Erfindung werden im Folgenden anhand der beigefügten Zeichnungen erläutert.

Es zeigen:
Fig. 1 eine schematische Übersichtsdarstellung einer automatischen Waschanlage anhand eines Ausführungsbeispiels;
Fig. 2 eine Schemazeichnung der elektronischen Einheiten gemäß einem Ausführungsbeispiel der Erfindung ;
Fig. 3 ein Ablaufdiagramm eines Verfahrens zum Betreiben einer Waschanlage mit einer geregelten Dosierpumpe gemäß einer vorteilhaften Ausführungsform der Erfindung; und
Fig. 4 eine schematische Übersichtsfigur mit einem Leitungssystem für Waschflüssigkeit und Additiv und elektrischen Verbindungen.

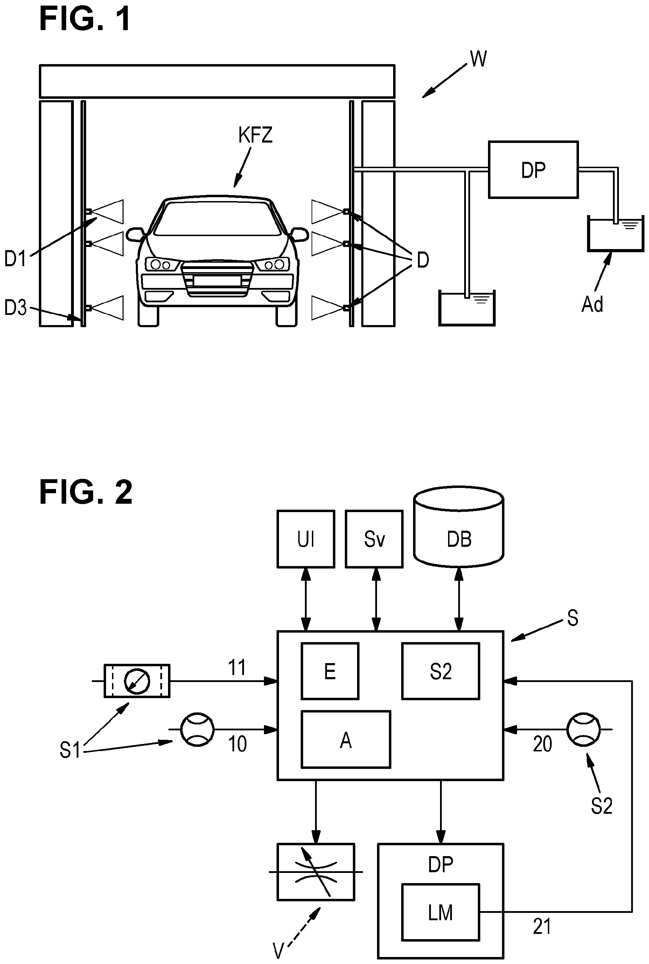

In Figur 1 ist eine schematische Übersichtsdarstellung einer Waschanlage W mit einer elektronisch regelbaren Dosierpumpe DP gemäß einem Ausführungsbeispiel der Erfindung dargestellt.

Die Dosierpumpe DP dient zur Förderung eines Additivs in einer bestimmten Dosierung. Das Additiv ist in einem Vorratsbehälter Ad gespeichert (in Fig. 1: rechter, oberer Behälter) und die Waschflüssigkeit kann in einem separaten Vorratsbehälter gespeichert sein (in Fig. 1: auf der rechten Seite, der linke, untere Behälter).

Bei der Waschanlage handelt es sich um eine automatische Waschanlage, bevorzugt um eine Portalwaschanlage für ein Fahrzeug KFZ mit zwei Seitenbürsten und einer Dachbürste, die in Fig. 1 schematisch dargestellt sind. Die Waschanlage umfasst des weiteren mehrere Betriebsaggregate, wie unter anderem Bürsten und ein Sprühsystem D. Das Sprühsystem D kann symmetrisch auf beiden Seiten der Maschine angeordnet sein und umfasst üblicherweise mehrere Sprühdüsen D1, D2, D3,... Dn. Die Anzahl und Anordnung der Sprühdüsen Di ist dabei für die vorliegende Erfindung ohne Belang. Wichtig ist, dass die Sprühdüsen von einem Gemisch gespeist werden, das eine Mischung von einer Waschflüssigkeit und einem zugesetzten Additiv ist. Bei der Waschflüssigkeit handelt es sich vorzugsweise um Frischwasser oder um rezykliertes Wasser. Bei dem Additiv kann es sich z.B. um chemische Substanzen, wie einen Felgenreingier handeln, der in einer hohen Konzentration bereitgestellt wird. Andere Anwendungen sehen die Zumischung von Schaumbildnern, Insektenentfernern, Trocknungshilfsmitteln oder einem Wachs vor.

Das Additiv soll in einer bestimmten, gewünschten Anwendungskonzentration in die Betriebsaggregate der Waschanlage W eingespeist werden. "Anwendungskonzentration" meint hier also das Verhältnis von dem Gemisch (Waschflüssigkeit plus zugesetztes Additiv) zu Waschflüssigkeit. Die gewünschte Anwendungskonzentration kann entweder vom Anwender über eine Mensch-Maschine-Schnittstelle, die an eine elektronische Steuereinheit S angebunden ist, eingegeben werden. Vorzugsweise ist die Benutzerschnittstelle Ul an der Maschine (Waschanlage W) angeordnet. Die gewünschte Anwendungskonzentration kann auch von einer Recheneinheit durch Zugriff auf einen Server SV mit gespeicherten Zuordnungen (von Parametern, die den Betriebszustand kennzeichnen und einer entsprechenden Sollvorgabe) automatisch berechnet werden.

Da das Additiv hochkonzentriert vorliegt, ist eine Dosierpumpe DP vorgesehen, die das Additiv aus dem Vorratsbehälter Ad in einer bestimmten Dosierung fördert und dem Wasser zumischt. Das Gemisch (Waschflüssigkeit + Additiv) wird dann an das Sprühsystem D eingespeist. In Fig. 1 entnimmt die Dosierpumpe DP das Additiv einem in der Figur rechts dargestellten Vorratsbehälter Ad und speist es in eine Speiseleitung in einer bestimmten Dosierung ein. Wie in Fig. 1 dargestellt, wird der Waschanlage W aus einem weiteren Behältnis Wasser bzw. Waschflüssigkeit über einen Versorgungsanschluss zugeführt. In eine an diesen Versorgungsanschluss angeschlossene Speiseleitung wird auch das Additiv eingespeist, so dass das Gemisch eine gewünschte Anwendungskonzentration hat, um je nach Ort (Position der Sprühdüse) und Zeit (Prozessschritt) eine möglichst optimale Waschleistung zu bewirken.

Je nach Prozessschritt ist es erfindungsgemäß möglich, unterschiedliche Anwendungskonzentrationen zu regeln und zwar abhängig von dem jeweiligen Betriebszustand. Dies soll bedeuten, dass auch Störgrößen, wie z.B. ein schwankender Wasserversorgungsdruck und/oder ein veränderter Wasservolumenstrom bei der Regelungsaufgabe berücksichtigt werden können, so dass auch bei verändertem Systemzustand (geänderte/r Volumenstrom, Pumpenleistung etc.) dennoch eine konstante Anwendungskonzentration oder eine Anwendungskonzentration gemäß einem gewünschten zeitlichen Verlaufs erzielt wird.

Dazu sind zwei Regelkreise vorgesehen:
1. Ein erster Regelkreis der Dosierpumpe DP und
2. Ein zweiter Regelkreis der Waschanlage W.

Ziel ist es, eine gewünschte Anwendungskonzentration von dem Additiv in Wasser bereitzustellen, mit dem die Sprühdüsen betrieben werden.

Bisher wurde dieses Ziel durch eine Steuerung erreicht. Eine entsprechende Vorgabe wurde fest eingestellt und das System wurde mit dieser Einstellung betrieben. In der Praxis hat es sich jedoch gezeigt, dass das System aufgrund von geänderten Systembedingungen, wie z.B. einem geänderten Wasservolumenstrom, sehr fehleranfällig ist. Die im Betrieb befindliche Dosierpumpe wurde für einen bestimmten Betriebszustand (z.B. für einen bestimmten Wasservolumenstrom) kalibriert. Änderte sich der Betriebszustand und wurde die Dosierpumpe nicht neu kalibriert, so änderte sich entsprechend bei den bekannten Systemen im Stand der Technik die Anwendungskonzentration, was im Ergebnis zu einem schlechten Waschergebnis oder zu einem überhöhten Additivverbrauch führte. Dies wiederum konnte Folgefehler auslösen.

Diese Fehler kann die hier vorgeschlagene Lösung vermeiden, indem die Sollvorgabe für die Dosierpumpe DP mittels der elektronischen Schaltungseinheit S (Fig. 2) geregelt wird.

Fig. 2 zeigt in einer schematischen Darstellung die elektronische Schaltungseinheit S im Datenaustausch mit der Dosierpumpe DP. Bei den in Fig. 2 dargestellten Pfeilen handelt es sich um elektrische Verbindungen für analoge und/oder digitale Signale im Rahmen der Regelung.

Die Dosierpumpe DP erhält von der elektronischen Schaltungseinheit S eine Sollvorgabe zur Förderung des Additivs in einer bestimmten Dosierung. Diese Sollvorgabe wird durch den zweiten Regekreis berechnet. Der zweite Regelkreis ist in der elektronischen Schaltungseinheit S implementiert. Mittels eines Volumenstrommessgerätes wird der Volumenstrom der Wasserversorgung gemessen und als Wasservolumenstromsignal 10 der elektronischen Schaltungseinheit S zur Verwendung in dem Regelkreis zugeführt. Alternativ oder kumulativ kann noch ein weiteres Messgerät und/oder ein weiterer Sensor, z.B. ein Druckmessgerät als weiteres Sensorgerät S1 ausgebildet sein, um den Wasserdruck zu messen und als Wasserdrucksignal 11 der elektronischen Schaltungseinheit S zugeführt zu werden. Erfindungsgemäß werden weitere technische Diagnosedaten berechnet, die aus den erfassten Sensordaten berechnet werden können. Fehlerdiagnostische Information kann insbesondere aus einem Abgleich der erfassten Größen (z.B. Wasservolumenstromwert und Wasserdruck) berechnet werden. So kann z.B. ein hoher Druck bei einem geringen Volumen auf Engstellen im Verbindungssystem (z.B. verstopfte Düsen) hinweisen oder umgekehrt: ein niedriger Druck bei hohem Volumen kann eine Leckage oder einen anderen Fehler indizieren.

Über eine Benutzerschnittstelle UI kann der Anwender eine gewünschte Anwendungskonzentration eingeben oder diese kann auch automatisch vom System aus anderen Größen berechnet werden. Dazu kann die elektronische Schaltungseinheit S über eine Netzwerkschnittstelle (z.B. UMTS-Modul) auf einen Server Sv mit Wetterdaten und/oder Fahrprofildaten zugreifen und darauf basierend, eine Anwendungskonzentration berechnen. Die elektronische Schaltungseinheit S kann auch auf hinterlegte Regeln in einer Datenbank DB zugreifen.

Die Dosierpumpe DP umfasst den ersten Regelkreis und kann einen Leistungsmesser LM umfassen. Dieser dient zur dosierpumpen-internen Erfassung der Leistung der Dosierpumpe, die aus den Prozessdaten der Pumpe DP und weiteren Sensordaten (Anzahl der Hübe, Hubvolumen etc.) berechnet werden kann. Das entsprechende Signal kann als Dosierpumpenleistung 21 an die elektronische Schaltungseinheit S gesendet werden, um Fehler der Dosierpumpe DP diagnostizieren zu können. Üblicherweise wird aber von einem fehlerfreien Betrieb ausgegangen, so dass die von der elektronischen Schaltungseinheit S an die Dosierpumpe DP gesendete Sollvorgabe (in Fig. 2 durch den nach unten weisenden Pfeil gekennzeichnet) der Dosierpumpenleistung entspricht.

In einer weiteren Variante kann eine weitere Sensoreinheit S2 in einem Leitungsbereich stromabwärts, also nach der Dosierpumpe DP, angeordnet sein, um das von der Dosierpumpe DP real geförderte Volumen des Additivs zu bestimmen. Auch dieses Volumenstrommesssignal 20 kann an die elektronische Schaltungseinheit S gesendet werden, um Fehler der Dosierpumpe DP diagnostizieren zu können.

Die elektronische Schaltungseinheit S kann auch eine oder mehrere Ventilanordnungen V ansteuern oder regeln, die in der Zuführleitung in Stromrichtung vor der Dosierpumpe DP angeordnet sind. In Fig. 2 ist beispielhaft ein Drosselventil dargestellt. Die Ventilanordnung V kann noch weitere Ventile (z.B. zur Druckregelung) aufweisen. Vorzugsweise sind die Bauteile der Ventilanordnung V elektronisch ansteuerbar. Dazu werden sie von der elektronischen Schaltungseinheit S mit entsprechenden Befehlen versorgt.

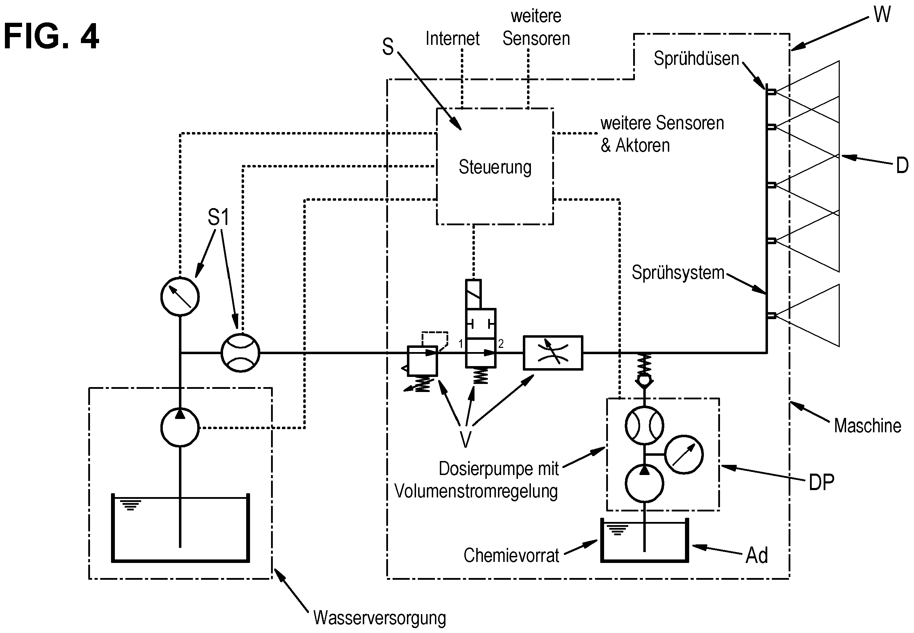

Wie in Fig. 4 dargestellt, weist die Waschanlage W (die in Fig. 4 mit der Strich-Punktlinie als Maschine gekennzeichnet ist) einen Versorgungsanschluss auf, um Wasser zuzuführen. Die in Fig. 4 gepunktet dargestellten Linien betreffen den Signal- und/oder Datenaustausch. Das Wasser kann aus einem linksseitig dargestellten Reservoir in die in Fig. 4 horizontal verlaufende, durchgezogen dargestellte Linie, die die Versorgungsleitung repräsentiert, gepumpt werden. Auf dieser Wasserversorgungs- oder Einspeiseleitung ist ein Volumenstrommessgerät angeordnet. Es kann auch zusätzlich ein Druckmessgerät als Sensorgerät S1 vorgesehen sein. Auf der Wasserversorgungsleitung können Ventilanordnungen V angeordnet sein, die in Fig. 4 mit dem Bezugszeichen V gekennzeichnet sind. Sie können z.B. zur Druckregulierung (Druckbegrenzungsventil) oder als 2/2-Wege Ventil zur selektiven Verteilung des Gemisches auf unterschiedliche Sprühdüsen Di ausgebildet sein. Weiterhin kann auch ein Drosselventil zum Einsatz kommen. Das Gemisch wird auf die jeweiligen Sprühdüsen Di verteilt. Dazu kann eine Verteilerschaltung ausgebildet sein. Diese Ventile können elektronisch von der elektronischen Schaltungseinheit S gesteuert werden.

Die Dosierpumpe DP dient zum Einspeisen des Additivs in einer bestimmten Dosierung/Anwendungskonzentration in diese Wasserversorgungsleitung. Je nachdem, welche Sensorsignale (Typ und Wert) von der elektronischen Schaltungseinheit S erfasst wurden (insbesondere in Abhängigkeit von dem erfassten Wasservolumenstrom), wird nun die Sollvorgabe für die Dosierpumpe DP berechnet und an diese in einem Befehlssatz weitergegeben. Die Pumpe DP wird dann mit dieser Sollvorgabe solange betrieben, wie der Systemzustand unverändert bleibt. Sobald sich der Systemzustand ändert (z.B. geänderter Wasservolumenstrom) wird die Sollvorgabe entsprechend nachgeregelt, um die gewünschte Anwendungskonzentration zu erzielen. Die Sensorsignale werden an den Regelkreis zurückgeführt. Wird also ein geänderter Volumenstrom erfasst, kann unmittelbar und automatisch eine entsprechend angepasste Sollvorgabe zur Dosierung der Dosierpumpe berechnet und an die Dosierpumpe zur Ausführung weitergeleitet werden. Eine manuelle Anpassung ist nicht mehr notwendig.

In einer weiteren Ausbildung kann pumpenseitig noch eine weitere Sensoreinheit S2 ausgebildet sein, die zur Erfassung von dosierpumpen-bezogenen Signalen dient. So ist es z.B. möglich, die Pumpenleistung zu erfassen oder aus Prozessdaten der jeweiligen Pumpe zu berechnen. Weiterhin kann ein weiterer Volumenstrommesser zur Erfassung der tatsächlich von der Dosierpumpe geförderten Menge des Additivs verwendet werden. Dieser ist stromabwärts und somit "nach" der Dosierpumpe DP angeordnet. Die mit diesen Messgeräten erfassten Daten oder die berechneten Daten werden zur Regelung an die elektronische Schaltungseinheit S zurückgeführt.

In einer weiteren vorteilhaften Ausführungsform der Erfindung werden weitere Pumpendaten von der Dosierpumpe an die elektronische Schaltungseinheit S gesendet. Dabei kann es sich beispielsweise um Fehlermeldungen (z.B. bei einem Kurzschluss), Druck- und Gegendruckangaben und/oder Temperaturdaten handeln. Diese Daten werden durch eine auf der elektronischen Schaltungseinheit S ausgebildeten Schaltungslogik zur Berechnung eines Ergebnisses verwendet, das z.B. auf der Benutzerschnittstelle UI ausgegeben werden kann. Damit kann die jeweilige Fehlerquelle schnell und einfach erkannt und noch vor Ort eliminiert werden.

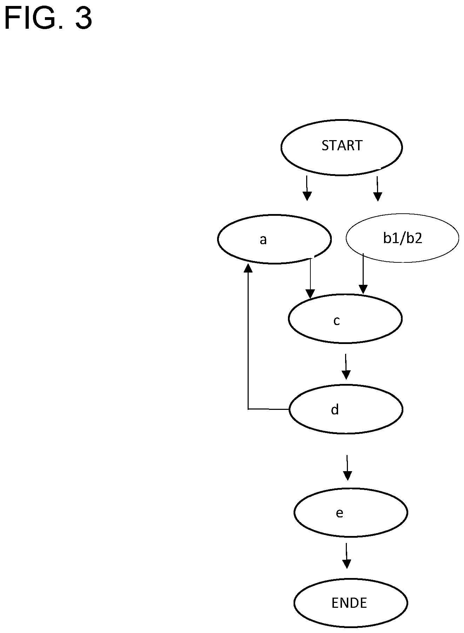

In Fig. 3 ist ein Ablaufdiagramm zum Betreiben einer Portalwaschanlage 1 dargestellt. Nach dem Start des Verfahrens wird in Schritt a ein Volumenstrom (Wasser) gemessen. In umfangreicheren Ausbildungen können fakultativ noch weitere Sensordaten erfasst werden (z.B. Messung des Wasserversorgungsdruckes). Es ist auch möglich, den Druck aus dem gemessenen Volumenstrom zu berechnen. Auch könnten fakultativ noch pumpenseitige Sensordaten in Schritt b1 erfasst oder in Schritt b2 berechnet werden (wie z.B. ein berechneter Volumenstrom des von der Dosierpumpe DP geförderten Additivs). Da es sich hier lediglich um fakultative Optionen handelt, sind diese in Fig. 3 gestrichelt dargestellt. In Schritt c wird die gewünschte Anwendungskonzentration (des Additivs in der Waschflüssigkeit) eingelesen oder erfasst. Dies kann auch schon zu einem früheren Zeitpunkt erfolgen. Auf Basis der Sensordaten und der Zielvorgaben für die Anwendungskonzentration wird dann eine Sollvorgabe für die Dosierpumpe DP berechnet und an diese zur Regelung in Schritt d weitergeleitet. Durch die Berücksichtigung der aktuell erfassten Sensordaten kann eine entsprechende Einhaltung der gewünschten Anwendungskonzentration auch bei veränderten Systembedingungen (Wasserdruck höher/niedriger) sichergestellt werden. Weiterhin wird in Schritt e zum Zwecke der Diagnose eine Ausgabe der berechneten Sollvorgabe und/oder der erfassten Sensordaten und/oder der eingelesenen Sensordaten der Dosierpumpe DP und/oder von berechneter fehlerdiagnostischer Information auf einer Benutzeroberfläche ausgegeben werden.

In einer bevorzugten Ausführungsform der Erfindung sind die beiden Regelkreise kaskadiert verschaltet. Der zweite Regelkreis der Waschanlage W gibt zusammen mit der gewünschten Anwendungskonzentration die Sollvorgabe für den ersten Regelkreis der Dosierpumpe DP. In dem ersten Regelkreis der Dosierpumpe können Gegendruck, Hublänge (Hubvolumen) und die Anzahl der Hübe gemessen werden, um die Dosierleistung entsprechend der Sollvorgabe zu regeln. Die Pumpenleistung kann jedoch auch aus den Prozessdaten der Pumpe DP berechnet werden. Im einfachsten Fall wird die Dosierpumpe auf Basis der berechneten Sollvorgabe gesteuert.

In das Zuleitungssystem für das Sprühsystem D können noch zusätzliche Stellglieder (z.B. zur Schaumerzeugung eine Druckluftzuführung mit elektrisch betätigbarem Proportionalventil für die Druckluft sowie einen Druckluftmesser) integriert sein.

Durch die Regelungsmöglichkeit der Dosierung bzw. der Anwendungskonzentration (des Additivs in der Waschflüssigkeit) in Abhängigkeit vom Systemzustand (Druck und/oder Volumen, Sprühdüsenzustand) kann die Anwendungskonzentration auch bei geänderten Bedingungen konstant gehalten oder gemäß der Sollvorgabe geregelt werden. Des Weiteren können die Sprühdüsen Di des Sprühsystems selektiv mit unterschiedlicher Anwendungskonzentration betrieben werden (z.B. höhere Konzentration für die Felgendüsen und niedrigere für die oberen Düsen). Dies kann erreicht werden, indem die einzelnen Sprühdüsen jeweils separat von einer Dosierpumpe versorgt werden oder, indem die Sprühdüsen zwar von derselben Dosierpumpe versorgt, aber im Waschprozess in unterschiedlichen Zeitphasen aktiviert bzw. betrieben werden. Es ist auch möglich, unterschiedliche Anwendungskonzentrationen für die einzelnen Prozessschritte der Fahrzeugwäsche vorzugeben (z.B. höhere Anwendungskonzentration für die Düsen D im Frontbereich und/oder bei der Hinfahrt des Portals und niedrigere für die Düsen im Heckbereich und/oder bei der Rückfahrt). Die Anwendungskonzentration kann somit abhängig von der Position der Sprühdüse D und/oder abhängig von einem Zeitpunkt im Waschablauf geregelt werden. So ist es insbesondere möglich, in der Sollvorgabe nicht nur einen konstanten Wert (für das zu fördernde Dosiervolumen) zu übermitteln, sondern einen Signalverlauf über die Zeit. Damit wird es möglich, die Anwendungskonzentration über die Zeit (sogar in einem Prozessschritt) veränderlich zu regeln (z.B. zu Beginn eine höhere und später eine niedrigere Anwendungskonzentration).

Vorstehend wurde eine mögliche Ausbildung der Regelungsaufgabe für die Dosierpumpe DP auf Basis des gemessenen Volumenstroms der Waschflüssigkeit beschrieben. Andere Ausbildungen sehen vor, andere Sensorsignale zu erfassen oder einzulesen und die Regelung auf diesen Signalen auszuführen. So kann z.B. die Temperatur gemessen werden, die Einfluss auf die Viskosität des Additivs haben kann und möglicherweise eine in Abhängigkeit von der Temperatur geänderter Dosierung erforderlich macht (z.B. bei einer niedrigeren Temperatur kann eine höhere Dosierung indiziert sein). Auch kann die Temperatur der Karosserie des Fahrzeugs KFZ gemessen oder erfasst werden und die Dosierpumpe DP kann auf Basis dieses Sensorsignals geregelt. Weiterhin kann die Position des Sprühsystems D der Waschanlage W in Bezug zu dem zu reinigenden Fahrzeug erfasst werden, um davon abhängig die Dosierpumpe DP zu regeln. So kann z.B. bei einem ersten Durchlauf des Portals über das Fahrzeug eine höhere Anwendungskonzentration zu applizieren sein als bei einem zweiten Rücklauf des Portals.

Die erfassten Sensorsignale und/oder die weiteren Daten werden vorzugsweise in der elektronischen Schaltungseinheit S zusammengeführt und aggregiert. Hier kann auf Basis der erfassten Daten eine Plausibilitätsüberprüfung der Sensordaten ausgeführt werden. Übersteigt z.B. ein Messwert einen Mittelwert um einen vorbestimmbaren Schwellenwert, so kann eine wiederholte Messung angefordert werden, um zu überprüfen, ob es sich um einen Messausreißer handelte. Wenn in einem anderen Fall, mehrere Dosierpumpen DP eingesetzt werden, deren Temperatur jeweils erfasst wird, und dabei zwei Temperaturmesswerte annähernd übereinstimmen, während der dritte Wert signifikant abweicht, kann eine wiederholte Temperaturmessung und/oder weitere Maßnahmen angestoßen werden, um einen möglichen Fehler möglichst früh zu detektieren.

Die vorliegende Erfindung betrifft eine automatische Waschanlage W für Fahrzeuge KFZ, mit einem Volumenstrommessgerät zum Messen eines Volumenstroms einer Waschflüssigkeit; einer Dosierpumpe DP zum Zuführen eines Additivs zu dem Volumenstrom; und einer elektronischen Schaltungseinheit S zum Regeln der Dosierpumpe DP in Abhängigkeit des Volumenstroms und zur Berechnung von fehlerdiagnostischer Information. Dadurch wird der technische Vorteil erreicht, dass das Additiv je nach dem veränderlichen Volumenstrom der Waschflüssigkeit zugegeben werden kann und Fehler möglichst frühzeitig detektiert werden können.

Daneben kann die Waschanlage ein Druckmessgerät zum Messen des Drucks der Waschflüssigkeit umfassen. Das Druckmessgerät kann in der Dosierpumpe DP angeordnet sein oder ein Teil der Dosierpumpe DP sein. Die Steuerungseinheit S kann zudem ausgebildet sein, sowohl den gemessenen Volumenstrom als auch den gemessenen Druck auszuwerten. Die Steuerungseinheit S kann den gemessenen Druck und den Volumenstrom mit elektronisch vorgespeicherten Werten für einen Normalzustand vergleichen, um einen Fehlerzustand der Waschanlage zu ermitteln.

Liegt beispielsweise ein hoher Volumenstrom bei niedrigem Druck im Vergleich zu den vorgespeicherten Werten vor, so kann als Fehlerzustand ein Leck in der Waschanlage angenommen werden. Liegt demgegenüber ein niedriger Volumenstrom bei hohem Druck im Vergleich zu den vorgespeicherten Werten vor, so kann als Fehlerzustand eine Verstopfung in der Waschanlage angenommen werden, wie beispielsweise die Verstopfung einer oder mehrerer Sprühdüsen.

Die vorliegende Erfindung betrifft zudem ein Verfahren zum Betreiben einer automatischen Waschanlage W für Fahrzeuge KFZ, mit den Schritten eines Messens eines Volumenstroms einer Waschflüssigkeit; eines Zuführens eines Additivs zu dem Volumenstrom; und eines Regelns einer Dosierpumpe DP in Abhängigkeit des Volumenstroms. Zudem kann der Druck der Waschflüssigkeit gemessen werden. Der gemessene Druck und der Volumenstrom können z.B. mit elektronisch vorgespeicherten Werten für einen Normalzustand verglichen werden oder anderweitig verarbeitet werden, um einen Fehlerzustand der Waschanlage zu ermitteln.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte des Verfahrens können durch elektronische Vorrichtungen (Schaltkreise) implementiert werden, die zum Ausführen des jeweiligen Verfahrensschrittes geeignet sind. Umgekehrt können alle Funktionen, die von gegenständlichen Merkmalen ausgeführt werden, auch in Software implementiert sein und ein Verfahrensschritt eines Verfahrens sein. So kann z.B. der Verfahrensschritt "Regeln" durch einen Regelkreisbaustein implementiert werden, der über die genannte, entsprechende Funktionalität verfügt.

Vorzugsweise werden alle Schritte des beanspruchten Verfahrens auf der elektronischen Schaltungseinheit S ausgeführt. Die Sensordaten (Volumenstrom) werden auf einem separaten Gerät gemessen und die Messdaten werden auf der elektronischen Schaltungseinheit S erfasst (also eingelesen über eine Eingangsschnittstelle E). Es ist jedoch auch möglich, dass einzelne Verfahrensschritte auf einzelne Module aufgeteilt und/oder ausgelagert werden. So kann insbesondere die Regelung auf einer anderen Recheneinheit ausgeführt werden, die mit der elektronischen Schaltungseinheit S in Datenverbindung steht.

Der Schutzbereich der vorliegenden Erfindung ist durch die Ansprüche gegeben und wird durch die in der Beschreibung erläuterten oder den Figuren gezeigten Merkmale nicht beschränkt.

Gemäß einem weiteren Aspekt betrifft diese Anmeldung eine automatische Waschanlage für Fahrzeuge, mit:
- einem Versorgungsanschluss zur Zufuhr einer Waschflüssigkeit;
- einer ersten Sensoreinheit zur Erfassung von Sensordaten, die als Volumenstrommessgerät ausgebildet und zur Messung eines versorgungsseitigen Volumenstroms der Waschflüssigkeit bestimmt ist;
- einem Vorratsbehälter für ein Additiv, das zur Zumischung in die Waschflüssigkeit bestimmt ist;
- einer elektronisch regelbaren Dosierpumpe, die dazu bestimmt ist, aus dem Vorratsbehälter einen Volumenstrom des Additivs zu fördern;
- einer elektronischen Schaltungseinheit mit einer Schnittstelle zum Erfassen einer gewünschten Anwendungskonzentration des Additivs in der Waschflüssigkeit, wobei die elektronische Schaltungseinheit zur Regelung der Dosierpumpe in Abhängigkeit von den erfassten Sensordaten bestimmt ist, indem eine Sollvorgabe für die Dosierpumpe derart berechnet wird, dass mit einem Volumenstromverhältnis zwischen gemessenem Volumenstrom der Waschflüssigkeit und dem von der Dosierpumpe geförderten Volumenstrom des Additivs die erfasste, gewünschte Anwendungskonzentration zur Einspeisung in Betriebsaggregate der Waschanlage erzielt wird.

Die Waschanlage kann eine Ventilanordnung umfassen, die in Eingriff steht mit der Zufuhr von Waschflüssigkeit und die zur Anpassung des Volumenstroms der zugeführten Waschflüssigkeit dient und dazu von der elektronischen Schaltungseinheit gesteuert und/oder geregelt wird.

Die automatische Waschanlage kann weiterhin umfassen:
- eine zweite Sensoreinheit zur Erfassung von dosierpumpen-bezogenen Betriebszustandsdaten, insbesondere einer Dosierpumpenleistung und/oder eines von der Dosierpumpe geförderten Volumenstroms des Additivs, von Fehlerstatusmeldungen, von Temperatursignalen und/oder von Druck- und Wegmesssignalen.

Die mit der Dosierpumpe bereitgestellte Anwendungskonzentration des Additivs in der Waschflüssigkeit kann über eine Verteilerventilanordnung zur selektiven Einspeisung in ausgewählte Betriebsaggregate der Waschanlage und insbesondere in ausgewählte Sprühdüsen eines Sprühsystems dediziert für jeweils einen Prozessschritt der Waschanlage verteilt werden.

Die elektronische Schaltungseinheit kann umfassen:
- eine Eingangsschnittstelle, die zur Erfassung von gemessenen Sensordaten von zumindest einem Volumenstrommessgerät bestimmt ist und
- die Schnittstelle zur Erfassung der gewünschten Anwendungskonzentration des Additivs in der Waschflüssigkeit;
- einer Ausgangsschnittstelle, die zur Ausgabe einer Sollvorgabe zur Regelung der Dosierpumpe bestimmt ist.

Die Eingangsschnittstelle kann weiterhin zur Erfassung von weiteren Sensordaten bestimmt sein und/oder eine Netzwerkschnittstelle zur Erfassung von weiteren Regelungsdaten umfassen.

Die Sensoreinheit der Waschanlage kann zusätzlich ein Druckmessgerät umfassen.

Gemäß einem weiteren Aspekt betrifft die Erfindung ein Verfahren zum Betreiben einer Waschanlage mit zumindest einer elektronisch regelbaren Dosierpumpe, mit folgenden Verfahrensschritten:
- Erfassen von Sensordaten, mit Erfasseneines gemessenen Volumenstroms einer Waschflüssigkeit;
- Einlesen einer gewünschten Anwendungskonzentration eines Additivs in der Waschflüssigkeit;
- Regeln einer Sollvorgabe für die Dosierpumpe zur Förderung eines Volumenstroms des Additivs, so dass in Abhängigkeit von erfassten Sensordaten und in Abhängigkeit von dem gemessenen Volumenstrom der Waschflüssigkeit die eingelesene gewünschte Anwendungskonzentration erzielt wird, wobei die Sollvorgabe für die Dosierpumpe derart berechnet wird, dass mit einem Volumenstromverhältnis zwischen gemessenem Volumenstrom der Waschflüssigkeit und dem von der Dosierpumpe geförderten Volumenstrom des Additivs die gewünschte Anwendungskonzentration zur Einspeisung in Betriebsaggregate der Waschanlage erzielt wird.

Der Volumenstrom des von der Dosierpumpe geförderten Additivs kann gemessen oder aus Prozessdaten der Dosierpumpe berechnet werdem.

Die Dosierpumpe kann in Abhängigkeit von einem veränderlichen Systemzustand und insbesondere in Abhängigkeit von erfassten Sensordaten und insbesondere einem veränderten Waschflüssigkeitsvolumenstrom und in Hinblick auf die gewünschte Anwendungskonzentration geregelt werden.

Das Verfahren kann eine zeitplanbasierte Regelung ausgeführen, so dass die Anwendungskonzentration gemäß der Sollvorgabe über die Zeit adaptiv veränderlich regelbar ist und insbesondere innerhalb eines Sprühlaufes veränderlich regelbar ist.

Alternativ oder kumulativ kann eine positionsbasierte Regelung ausgeführt werden, indem die Waschanlage mehrere Dosierpumpen umfasst, die separat geregelt werden, so dass die Anwendungskonzentration zum Betreiben der von der jeweiligen Dosierpumpe gespeisten Betriebsaggregate adaptiv und einzeln vorgegeben wird.

Das Einlesen der Anwendungskonzentration kann jeweils für einen Prozessschritt der Waschanlage einzeln und separat erfolgen.

Die Anwendungskonzentration kann auch bei schwankendem Waschflüssigkeitsdruck und/oder bei Veränderungen im Sprühsystem und/oder unter Berücksichtigung von anderen Störgrößen regelbar sein.

Als Sensordaten können neben dem Volumenstrom der Waschflüssigkeit ein Druck der Waschflüssigkeit erfasst werden, um aus dem Verhältnis der erfassten Sensordaten fehlerdiagnostische Information zu berechnen und bereitzustellen.

## Patentansprüche

1. Verfahren zum Betreiben einer Waschanlage (W) mit zumindest einen elektronisch regelbaren Dosierpumpe (DP), mit folgenden Verfahrensschritten:
- Erfassen von Sensordaten, insbesondere Erfassen (a) eines Volumenstroms einer Waschflüssigkeit;
- Einlesen (c) einer gewünschten Anwendungskonzentration des Additivs in der Waschflüssigkeit;
- Regeln (d) einer Sollvorgabe für die Dosierpumpe (DP) zur Förderung eines Volumenstroms des Additivs, so dass in Abhängigkeit von erfassten Sensordaten und insbesondere in Abhängigkeit von dem erfassten Volumenstrom der Waschflüssigkeit die eingelesene gewünschte Anwendungskonzentration erzielt wird,
- wobei als Sensordaten neben dem Volumenstrom der Waschflüssigkeit Diagnosedaten, umfassend einen Druck der Waschflüssigkeit, erfasst werden, um aus den erfassten Sensordaten fehlerdiagnostische Information zu berechnen und bereitzustellen.

2. Verfahren nach dem vorstehenden Verfahrensanspruch, bei dem ein Volumenstrom des von der Dosierpumpe (DP) geförderten Additivs gemessen (b1) oder aus Prozessdaten der Dosierpumpe (DP) berechnet (b2) wird.

3. Verfahren nach einem der vorstehenden Verfahrensansprüche, bei dem die Dosierpumpe (DP) in Abhängigkeit von einem veränderlichen Systemzustand und insbesondere in Abhängigkeit von erfassten Sensordaten und insbesondere einem veränderten Waschflüssigkeitsvolumenstrom und in Hinblick auf die gewünschte Anwendungskonzentration geregelt wird.

4. Verfahren nach einem der vorstehenden Verfahrensansprüche, bei dem eine zeitplanbasierte Regelung ausgeführt wird, so dass die Anwendungskonzentration gemäß der Sollvorgabe über die Zeit adaptiv veränderlich regelbar ist und insbesondere innerhalb eines Sprühlaufes veränderlich regelbar ist.

5. Verfahren nach einem der vorstehenden Verfahrensansprüche, bei dem eine positionsbasierte Regelung ausgeführt wird, indem die Waschanlage (W) mehrere Dosierpumpen (DP) umfasst, die separat geregelt werden, so dass die Anwendungskonzentration zum Betreiben der von der jeweiligen Dosierpumpe (DP) gespeisten Betriebsaggregate (D1, D2, ...Dn) adaptiv und einzeln vorgegeben wird.

6. Verfahren nach einem der vorstehenden Verfahrensansprüche, bei dem das Einlesen der Anwendungskonzentration jeweils für einen Prozessschritt der Waschanlage (W) einzeln und separat erfolgt.

7. Verfahren nach einem der vorstehenden Verfahrensansprüche, bei dem die Anwendungskonzentration auch bei schwankendem Waschflüssigkeitsdruck und/oder bei Veränderungen im Sprühsystem und/oder unter Berücksichtigung von anderen Störgrößen regelbar ist.

8. Elektronische Schaltungseinheit (S) zum Betreiben einer elektronisch regelbaren Dosierpumpe (DP) für eine Waschanlage mit:
- einer Eingangsschnittstelle, die zur Erfassung (a) von gemessenen Sensordaten von zumindest einem versorgungsseitigen Volumenstrommessgerät bestimmt ist;
- einer Schnittstelle, insbesondere einer Benutzerschnittstelle, zur Erfassung (c) einer gewünschten Anwendungskonzentration eines Additivs in der Waschflüssigkeit;
- einer Ausgangsschnittstelle, die zur Ausgabe einer Sollvorgabe zur Regelung der Dosierpumpe (DP) und zur Ausgabe von fehlerdiagnostischen Informationen bestimmt ist;
- wobei die elektronische Schaltungseinheit (S) zum Regeln (d) einer Sollvorgabe für die Dosierpumpe (DP) zur Förderung eines Volumenstroms des Additivs bestimmt ist, so dass in Abhängigkeit von erfassten Sensordaten und insbesondere in Abhängigkeit von dem erfassten Volumenstrom der Waschflüssigkeit die eingelesene gewünschte Anwendungskonzentration erzielt wird,
- wobei als Sensordaten neben dem Volumenstrom der Waschflüssigkeit Diagnosedaten, umfassend einen Druck der Waschflüssigkeit, erfasst werden,
- wobei die elektronische Schaltungseinheit (S) mit einer Diagnoseeinheit ausgebildet ist, um aus den erfassten Sensordaten fehlerdiagnostische Informationen zu berechnen und insbesondere auf der Ausgangsschnittstelle bereitzustellen.

9. Dosierpumpe (DP) mit einer elektronischen Schaltungseinheit (S) gemäß dem vorangehenden Anspruch.

## Claims

1. Method for operating a washing system (W) having at least one electronically controllable metering pump (DP), having the following method steps:
- Detecting of sensor data, in particular detection (a) of a volumetric flow of a washing liquid;
- Reading in (c) a desired application concentration of the additive in the washing liquid;
- Controlling (d) a setpoint for the metering pump (DP) for delivering a volumetric flow of the additive, so that the read-in desired application concentration is achieved as a function of detected sensor data and in particular as a function of the detected volumetric flow of the washing liquid,
- wherein, in addition to the volume flow of the washing liquid, diagnostic data comprising a pressure of the washing liquid are detected as sensor data in order to calculate and provide fault-diagnostic information from the detected sensor data.

2. Method according to the preceding method claim, in which a volumetric flow rate of the additive delivered by the metering pump (DP) is measured (b1) or calculated (b2) from process data of the metering pump (DP).

3. Method according to any one of the preceding method claims, in which the metering pump (DP) is controlled as a function of a variable system state and, in particular, as a function of recorded sensor data and, in particular, a changed washing liquid volumetric flow and with regard to the desired application concentration.

4. Method according to any one of the preceding method claims, in which a time-schedule-based control is carried out so that the application concentration can be adaptively variably controlled over time according to the setpoint and in particular can be variably controlled within a spray run.

5. Method according to any one of the preceding method claims, in which position-based control is carried out in that the washing system (W) comprises a plurality of metering pumps (DP) which are controlled separately, so that the application concentration for operating the operating units (D1, D2, ...Dn) fed by the respective metering pump (DP) is specified adaptively and individually.

6. Method according to any one of the preceding method claims, in which the application concentration is read in individually and separately for a respective process step of the washing system (W).

7. Method as claimed in any one of the preceding method claims, in which the application concentration can also be controlled in the event of fluctuating washing liquid pressure and/or in the event of changes in the spray system and/or taking into account other disturbance variables.

8. Electronic circuit unit (S) for operating an electronically controllable metering pump (DP) for a washing system, having:
- an input interface intended for the detection (a) of measured sensor data from at least one supply-side volumetric flow meter;
- an interface, in particular a user interface, for detecting (c) a desired application concentration of an additive in the washing liquid;
- an output interface intended for outputting a setpoint for controlling the metering pump (DP) and for outputting fault-diagnostic information;
- the electronic circuit unit (S) being intended for controlling (d) a setpoint for the metering pump (DP) for delivering a volumetric flow of the additive, so that the read-in desired application concentration is achieved as a function of sensed sensor data and, in particular, as a function of the sensed volumetric flow of the washing liquid,
- wherein diagnostic data, comprising a pressure of the washing liquid, are detected as sensor data in addition to the volume flow of the washing liquid,
- the electronic circuit unit (S) being configured with a diagnostic unit in order to calculate fault-diagnostic information from the acquired sensor data and, in particular, to provide it on the output interface.

9. Dosing pump (DP) with an electronic circuit unit (S) according to the preceding claim.

## Revendications

1. Procédé pour faire fonctionner une installation de lavage (W) avec au moins une pompe de dosage (DP) à réglage électronique, comprenant les étapes de procédé suivantes:
- Saisie de données de capteurs, en particulier saisie (a) d'un débit volumétrique d'un liquide de lavage ;
- Lecture (c) d'une concentration d'application souhaitée de l'additif dans le liquide de lavage;
- Régulation (d) d'une consigne pour la pompe de dosage (DP) pour le refoulement d'un courant volumétrique de l'additif, de sorte que la concentration d'application souhaitée lue soit obtenue en fonction des données de capteur détectées et en particulier en fonction du courant volumétrique détecté du liquide de lavage,
- des données de diagnostic, comprenant une pression du liquide de lavage, étant saisies comme données de capteur en plus du débit volumétrique du liquide de lavage, afin de calculer et de mettre à disposition des informations de diagnostic d'erreur à partir des données de capteur saisies.

2. Procédé selon la revendication de procédé précédente, dans lequel un débit volumétrique de l'additif refoulé par la pompe de dosage (DP) est mesuré (b1) ou calculé (b2) à partir de données de processus de la pompe de dosage (DP).

3. Procédé selon l'une des revendications de procédé précédentes, dans lequel la pompe de dosage (DP) est réglée en fonction d'un état variable du système et en particulier en fonction de données de capteur saisies et en particulier d'un débit volumétrique modifié de liquide de lavage et en vue de la concentration d'application souhaitée.

4. Procédé selon l'une des revendications de procédé précédentes, dans lequel une régulation basée sur un plan temporel est effectuée, de sorte que la concentration d'application peut être régulée de manière variable et adaptative dans le temps conformément à la consigne et peut notamment être régulée de manière variable d'un cycle de pulvérisation.

5. Procédé selon l'une des revendications de procédé précédentes, dans lequel une régulation basée sur la position est réalisée en ce que l'installation de lavage (W) comprend plusieurs pompes de dosage (DP) qui sont régulées séparément, de sorte que la concentration d'application pour le fonctionnement des groupes de fonctionnement (D1, D2, ...Dn) alimentés par la pompe de dosage (DP) respective est prédéfinie de manière adaptative et individuelle.

6. Procédé selon l'une des revendications de procédé précédentes, dans lequel la lecture de la concentration d'application est effectuée individuellement et séparément pour une étape de processus de l'installation de lavage (W).

7. Procédé selon l'une des revendications de procédé précédentes, dans lequel la concentration d'application peut être réglée même en cas de pression fluctuante du liquide de lavage et/ou de modifications dans le système de pulvérisation et/ou en tenant compte d'autres grandeurs perturbatrices.

8. Unité de circuit électronique (S) pour faire fonctionner une pompe de dosage (DP) à réglage électronique pour une installation de lavage, comprenant:
- une interface d'entrée qui est destinée à l'acquisition (a) de données de capteur mesurées par au moins un débitmètre volumétrique côté alimentation ;
- une interface, en particulier une interface utilisateur, destinée à détecter (c) une concentration d'application souhaitée d'un additif dans le liquide de lavage ;
- une interface de sortie, qui est destinée à émettre une consigne pour la régulation de la pompe de dosage (DP) et à émettre des informations de diagnostic d'erreur ;
- l'unité de circuit électronique (S) étant destinée à la régulation (d) d'une consigne pour la pompe de dosage (DP) pour le refoulement d'un débit volumétrique de l'additif, de sorte que la concentration d'application souhaitée lue est obtenue en fonction de données de capteur détectées et en particulier en fonction du débit volumétrique détecté du liquide de lavage,
- des données de diagnostic, comprenant une pression du liquide de lavage, étant saisies comme données de capteur en plus du débit volumétrique du liquide de lavage,
- l'unité de circuit électronique (S) étant conçue avec une unité de diagnostic afin de calculer des informations de diagnostic d'erreur à partir des données de capteur saisies et de les mettre à disposition en particulier sur l'interface de sortie.

9. Pompe doseuse (DP) avec une unité de circuit électronique (S) selon la revendication précédente.
